Europäisches Patentamt

(19) European Patent Office

Office européen des brevets

(11) Publication number: **0 208 506**
**B1**

# EUROPEAN PATENT SPECIFICATION

(45) Date of publication of the patent specification:
27.06.90

(51) Int. Cl.⁵: **D01F 9/08,** C04B 35/44,
C01F 7/16

(21) Application number: 86305133.0

(22) Date of filing: 02.07.86

(54) Magnesium aluminate fiber composition and process therefor.

(30) Priority: 02.07.85 US 751337

(43) Date of publication of application:
14.01.87 Bulletin 87/3

(45) Publication of the grant of the patent:
27.06.90 Bulletin 90/26

(84) Designated Contracting States:
BE DE FR GB IT NL

(56) References cited:
EP-A- 0 110 704
DE-A- 2 130 315
US-A- 3 322 865

(73) Proprietor: THE DOW CHEMICAL COMPANY, 2030 Dow
Center Abbott Road P.O. Box 1967, Midland
Michigan 48640-1967(US)

(72) Inventor: Dahar, Stephen L., 5727 Sturgeon Road,
Midland Michigan 48640(US)
Inventor: Stevens, Rex R., 4311 Andre Street, Midland
Michigan 48640(US)

(74) Representative: Burford, Anthony Frederick et al, W.H.
Beck, Greener & Co. 7 Stone Buildings Lincoln's Inn,
London WC2A 3SZ(GB)

## Description

This invention concerns magnesium aluminate fibers and more particularly a composition and process for preparing magnesium aluminate ($MgAl_2O_4$) fibers useful as refractory fibers.

Energy conservation efforts by industry in recent years have led to an increase in the use of ceramic fibers for high temperature insulation applications. Furnace lining products fabricated from ceramic fibers have a lower heat capacity and are better insulators than traditionally used dense firebrick refractories. The replacement of firebrick with a fibrous refractory lining can reduce thermal conductivity by more than 50 percent, and the lower heat capacity of the fibrous refractory lining reduces heat-up cost and allows faster heating/cooling cycle rates.

Currently available ceramic fiber refractory products, which are fabricated mainly from alumino-silicate or alumina fibers, are generally limited to use temperatures below 1600°C and are inappropriate in a corrosive environment. Products made from fibrous zirconia are useful at temperatures up to 2,200°C and are stable in most corrosive environments, but are relatively expensive for normal industrial furnace lining applications.

Consequently, a fiber that exhibits good corrosion resistance and/or is usable above 1,600°C for long periods is much desired. $MgAl_2O_4$ fibers possess both of these properties and have a relatively lower raw material cost than some other currently produced fibers, such as $ZrO_2$ fibers.

Previous art, notably US-A 4 020 233; 3 992 498; and 3 322 865, describe various methods of making magnesium aluminate fibers from solution. For example, US-A 3 322 865 discloses the preparation of magnesium aluminate fibers by decomposing a solution formed by mixing technical grade aluminum chloride solution of 32° Baume (100 parts by weight), aluminum metal (20 parts by weight), technical grade magnesium chloride hexahydrate (100 parts by weight) and water (200 parts by weight); heating the mixture at 170–210°F (75–100°C) for 2 to 4 hours; screening; and concentrating to about 1.5 g/ml by evaporation. In each case the prior art solutions are unstable and a precipitate frequently results within a short time. Once this happens, the solution becomes incapable of being spun into fiber. When the fiberizing procedure can be performed, the resultant fibers are often extremely fragile and therefore difficult to handle.

Surprisingly, it has been found that a fiberizable composition that is suitable for producing magnesium aluminate fibers that can be readily handled can be obtained by controlling the order in which starting metals are added to form the precursor solution. Thus according to a first aspect, the present invention comprehends a process for preparing a fiberizable precursor solution suitable for the preparation of magnesium aluminate fibers which comprises the sequential steps of:

(a) preparing an aluminum salt solution;
(b) dissolving magnesium metal or compound in the solution prepared in step (a); and
(c) dissolving aluminum metal or compound in the solution prepared in step (b).

The present invention further comprehends a process for preparing magnesium aluminate fibers which comprises: concentrating to a viscous material of from 25 to 500 poise (2.5–50 Pa • s) a said precursor solution to which a dopant and a stabilizing agent have been added; fiberizing the viscous material to form fibers; and heating these fibers sufficiently to form crystalline magnesium aluminate fibers.

In general, the present invention comprehends the production of magnesium aluminate fibers of novel composition by a process that involves forming a fiberizable solution of specific composition; fiberizing the solution; and then heating the resultant fibers at a temperature sufficient to crystallize the magnesium aluminate fibers. By "fiberizable solution" it is meant a solution which is capable of being formed into fibers by known methods.

It also has surprisingly been found that fibers of significantly improved friability index are obtained by controlling the Al:Mg ratio of the precursor solution so that it is within the range 2.03 to 2.20. Thus, in another aspect, the present invention comprehends a composition which comprises a fiberizable precursor solution suitable for producing magnesium aluminate fibers having a fine grained microstructure with a molar ratio of aluminum to magnesium within the range of from 2.03 to 2.20.

Providing a precursor, fiberizable solution capable of decomposing upon heating to form crystalline fibers of magnesium aluminate having a fine-grained microstructure is an important feature of the present invention. By "fine-grained" is meant a microstructure in which grains have average diameters in the range of from 0.01 to 5 micrometers (μm), preferable from 0.01 to 0.1 μm. An important aspect of forming the fiberizable solution is control of the step order of addition of materials. In general, the procedure involves, first, dissolution of an aluminum salt in a polar solvent; followed by addition of a magnesium compound or, preferably, magnesium metal. The magnesium is allowed to dissolve, and then an aluminum compound or, preferably, aluminum metal, is added to the solution which is now a precursor fiberizable magnesium aluminate solution. Other additives may include a dopant, which serves to substantially densify the final fiber and which may be added at any point; a stabilizing agent; and a spinning aid. Of these, the stabilizing agent and spinning aid must be added after the basic precursor solution is formed. The solution may then be concentrated as necessary for fiberizing by known methods.

The reason for the order of addition (i.e., formation of the aluminum salt solution, then dissolution of magnesium metal or compound, followed by dissolution of aluminum metal or compound) is that, by following this order, the pH of the solution is maintained below about 7, i.e., the solution is to some degree acidic throughout its preparation. This acidity encourages complete dissolution of the magnesium and therefore helps to reduce or eliminate entirely the possibility of a precipitate of magnesium forming. It is preferred that the magnesium be given time to completely dissolve prior to addition of the aluminum metal or compound, since dissolution of the magnesium will stop when the aluminum metal or compound is added. Since the solution's essential nature is thereby preserved, there is increased solution stability with time and therefore also increased suitability for fiberizing, since formation of precipitates generally makes fiberizing difficult or impossible and disrupts the stoichiometry of the final product desired. The stability of the present invention also offers commercial advantage and economy, since storage and shipment of the solution are facilitated. Further economical advantage may be obtained through judicious selection of starting materials.

Any polar solvent is efficacious in the formation of the precursor solution, with the provision that the aluminum salt, magnesium metal or compound and aluminum metal or compound are soluble in it. It may be organic or inorganic. Among possible choices are, for example: an alcohol, in particular, methanol or ethanol; glacial acetic acid; dimethylsulphoxide; dimethylformamide; water; or mixture of these. It is preferred to use water as a solvent, from the standpoint of convenience and expense.

The compounds of magnesium and aluminum as used herein include their suitable inorganic metal salts such as sulfates, nitrates, chlorides and phosphates, and mixtures thereof. A sufficient amount of magnesium and aluminum metal or compounds are dissolved in the previously specified order in the solvent to provide a resulting solution with the desired aluminum to magnesium molar ratio. This ratio should be carefully calculated. The theoretical aluminum to magnesium molar ratio for stoichiometric magnesium aluminate is 2.00; however, in this invention the aluminum to magnesium molar ratio is desired to be between 2.03 and 2.20, more preferably between 2.03 and 2.10, and most preferably about 2.05. It is further preferred that the cation (i.e., aluminum and magnesium) to anion (i.e., chloride, nitrate, sulfate) molar ratio be as high as possible. The cation to anion molar ratio is desired to be from 0.33 to 1.0, and preferably about 1.0. In general, the high cation to anion ratios result in increased metals loading, which results in better quality fiber that is less susceptible to shrinkage upon calcination. This is because of reduced grain growth and porosity in the microstructure.

In carrying out one process of the present invention, it is preferred to use, e.g., magnesium and aluminum and an aqueous aluminum salt solution to form the fiberizable solution. The magnesium and aluminum metals used are in the form of powders, small particles or turnings in order to facilitate dissolution of the metals in the solution. Generally, the metals are added to the solution in a form such as powders having a high surface area. The aluminum salt used is a halide of aluminum such as aluminum chloride, bromide or iodide; sulphate; nitrate; or mixtures thereof. As an example of the present process, the magnesium metal may be dissolved directly in an aluminum chloride salt solution, then the aluminum metal may be added to the mixture, preferably not until the magnesium has dissolved completely, to provide the ratio of Al:Mg required for the solution. A precipitate will occur, however, when the aluminum metal is dissolved in the aluminum chloride salt solution prior to adding the magnesium metal. As noted above, the precipitate adversely affects the spinnability of the solution, the stability of the solution, and the stoichiometry of the final fibers when the solution is fiberized.

A dopant is optionally added to the precursor solution. This is a soluble metal compound and serves to decrease both the grain size and shrinkage potential of the final fibers. The dopant component is added as a soluble compound capable of forming an oxide upon heating. The dopant aids in the densification of the final fiber and substantially eliminates the formation of pores in the final fiber. In addition to minimizing shrinkage, it also adds strength to the fibers. These advantages are believed to result because the presence of dopant in the final product speeds the formation of a $MgAl_2O_4$ phase by increasing the defect concentration. At higher (i.e. > 1200°C) temperatures the dopant decreases the sintering rate of the $MgAl_2O_4$ which prevents the formation of trapped porosity and relatively larger grains, for example, grains larger than about one $\mu m$ in diameter. Suitable dopants include any compound or compounds which decompose to the following: $ZrO_2$; $MnO_2$; $TiO_2$; $Cr_2O_3$; $Y_2O_3$; or mixtures thereof. Preferably, the solution is doped with a compound which will decompose upon heating to $ZrO_2$, such as $ZrCl_4$, because $ZrO_2$ has desirable refractory properties such as a high melting point (~2700°C). The solution should have a sufficient amount of dopant such that the final product, i.e., the fibers, has a concentration of dopant lying in the range from 500 parts per million (ppm) up to 50,000 ppm. Preferably, the level of dopant should be sufficient to provide a concentration in the final product lying in the range from 2,000 to 5,000 ppm. The dopant may be added at any point in preparation of the solution.

The solution according to the present invention also contains a "stabilizing agent" or "stabilizer," in a concentration preferably lying in the range of from 10 to 100 grams/mole of $MgAl_2O_4$ in solution. This stabilizer is always added prior to concentrating the solution. More preferably, the stabilizer is present in the solution in a concentration of between 30 to 70 grams/mole of $MgAl_2O_4$ in solution, most preferably between 45 to 55 grams/mole of $MgAl_2O_4$ in solution. Suitable materials used as the stabilizing agent may include, for example, carboxyl type organic acids such as lactic, acetic, formic, oxalic, citric, tartaric, maleic, adipic, itaconic, their halogenated derivatives and the like. The preferred stabilizer is lactic acid. Preferably, the stabilizer used in the solution does not react with the metal compounds, such that the stabilizer is not thereby depleted. The stabilizer provides a stable solution with a higher solids content, i.e., about 30 percent by weight based on $MgAl_2O_4$, such that fibers can easily be formed by known methods. By "stable solution" is meant a solution that does not crystallize or gel and remains fluid. Typically, a stable solution will remain fluid for approximately one month under ambient conditions. Addition of more solvent will allow the solution to remain fluid indefinately.

Once the precursor solution is formed, it may be concentrated as needed to produce a solution sufficiently viscous for fiberizing. The viscosity of the solution preferably lies in the range from 25 to 500 poise (2.5 to 50 Pa.s) and, more preferably from 60 to 150 poise (6 to 15 Pa.s). Concentration may be by evaporation of the solvent or other effective means, such as a rotary evaporator or other apparatus, and is preferably carried out at a temperature of 90 to 110°C and at atmospheric pressure (0.1 MPa). Lower temperatures can be used at reduced pressures. This concentration step serves to maximize the solids content of the solution, which generally is up to about 30 percent by weight based on $MgAl_2O_4$.

Optionally, other additives may be present in the solution, for example, an additive for providing corrosion resistance to the fiber, such as a chromium compound, or an additive for facilitating the spinning of the solution such as an organic polymeric spinning aid. These are generally added after the concentration step, for reasons of convenience, but may be added prior to concentration, if desired. Various spinning aids which may be used in the present invention are known in the art such as those described in U. S. Patent 3,992,498, including partially hydrolyzed polyvinyl acetate, polyvinyl alcohol, polyacrylamide and partially hydrolyzed polyacrylamide, polyacrylic acids, polyethylene oxides, carboxyalkyl celluloses (for example, carboxymethyl cellulose), hydroxyalkyl celluloses (for example, hydroxymethyl cellulose), alkyl celluloses (for example, methyl cellulose), hydrolyzed starches, dextrans, guar gum, polyvinyl pyrrolidones, polyethylene glycols, alginic acids, polyisobutylene derivatives, polyurethanes and esters, copolymers or mixtures thereof. Preferred spinning aids are straight-chain polyhydroxylate organic polymers, for example, polyvinyl alcohol, partially hydrolyzed polyvinyl acetate, polyethylene oxide, or polyethylene glycol; most preferred, because of convenience and economy is polyethylene oxide. The spinning aid or aids should preferably be added after the basic precursor solution is formed.

The reason for the specific order of addition of the three main starting materials given above is the tendency of a precipitate of metals to form when a different order of steps is followed. The precipitation results in a suspension which is generally incapable of being fiberized. It is preferred to maintain the solution at 70 to 110°C, more preferably 90 to 110°C, until the starting components and the dopant are incorporated. This temperature range is sufficient to hasten the reaction while maintaining the solution's essential nature without encouraging premature decomposition of the components. This helps to ensure a fiberizable resultant solution. The temperature of this solution is then preferably lowered to between 25 to 70°C, more preferably 40 to 70°C, and the stabilizer and spinning aid are then incorporated into the solution. This minimizes the likelyhood of reaction between the stabilizer or spinning aid and the precursor solution.

The concentrated fiberizable precursor solution, which may contain the additional materials such as dopant, stabilizer, and spinning aid, is now ready for fiberizing. The solution may be formed into green or precursor fibers by any of the known dry spinning techniques, for example, by blow-spinning or centrifugal spinning. Preferably, the precursor fibers from the solution are formed by a blow-spinning operation in which the solution is extruded through orifices into converging (e.g. 30°), high velocity streams of dry nitrogen gas which elongates the fiber. The fibers are dried by exposure to hot air of low relative humidity present in the spinning chamber. An example of a suitable process for fiberizing the solution is described in U. S. Patent 3,992,498.

The precursor fibers formed by the fiberizing step may then be collected and heated sufficiently to remove any volatiles from the fibers and convert the fibers into their crystalline form, i.e., their oxide form. The precursor fibers, once heated or sintered, form $MgAl_2O_4$ fibers. Generally, the fibers are heated at from 100 to 150°C for one to four hours to dry the fibers. The fibers are then fired at from 800 to 1,600°C, preferably from 1,300 to 1,500°C, for one minute to four hours to form the magnesium aluminate fibers which may be used as refractory material. More preferably the fibers are held at temperature for 1 minute to 1 hour.

Furthermore, it is possible, in order to obtain superior fibers useful as refractory material, to subject the fibers to a heating cycle, i.e., the fibers are heated in successively higher steps in a plateau-like cycle, for example, as described in Table I of Example 2. The cyclic heating serves to maintain slow outgassing which prevents disruption of the fiber structure.

Having formed the fibers above, the fibers may be useful in high temperature (i.e. ≥ 1,500°C) thermal insulation applications such as for furnace lining. The fibers may also be useful as a reinforcing additive in other ceramics or plastics. In addition the fibers may be used as a catalyst support. The fibers formed in accordance with the present invention, in addition to having high temperature and corrosion resistance, are characterized as being quite "handleable," i.e., they are not fragile and do not tend to break up easily or crumble upon handling.

The refractory $MgAl_2O_4$ fibers prepared by the present invention have a relatively higher friability index than $MgAl_2O_4$ fibers prepared by other known methods. The "friability index" of the fibers is a measure of the fiber's fracture resistance or non-friable nature. A test procedure which may be used to measure the friability index of a fiber product formed in accordance with the present invention is disclosed in U. S. Patent 4,047,965. While there are other commonly known friability tests, this one has been selected for use with the examples, _infra_, because of its ease and relative reliability.

General Friability Test Procedure

The friability index of the fibers produced by the process of the present invention is determined by placing a sample of fibers weighing 0.5 to 2.0 grams in a 1 pint (0.57 l) glass jar containing 25 size No. 00 standard laboratory rubber stoppers. The jar is sealed with a screw top, placed on a ball mill roller and rotated for 4 minutes. The fibers are then rinsed onto a 50 mesh (0.3 mm) test screen with water containing a detergent such as Calgon® (a trademark of the Calgon Corporation, Pittsburgh Activated Carbon Division). The screen and the fibers retained thereon are heated at 125°C until dry. The fibers are then removed from the screen and weighed. The "friability index" is that number obtained by dividing the weight of dry fibers retained on the screen by the total weight of the initial fibers placed in the jar. A friability index of "zero" means the fiber is so fragile or weak that it breaks into short fragments or disintegrates to dust when rubbed even gently between the index finger and thumb. A test sample of fiber product having a friability index of "zero" washes completely through the test screen, i.e., essentially no fibers are retained on the screen. A friability index of "one" represents a sample which does not break into short fragments upon milling and is therefore retained in its entirety on the screen.

Example 1

A 48.28 gram (g) (0.2 mole) sample of $AlCl_3 \cdot 6H_2O$ was dissolved in 150 g $H_2O$ and heated to 90°C. As the hot (90°C) solution was stirred, 4.86 g (0.2 mole) of Mg metal turnings were added in 0.5 g portions over a 2 hour period with evolution of $H_2$ gas. After all the Mg metal was dissolved in the $AlCl_3$ solution, 5.39 g (0.2 mole) of Al metal turnings were added to the stirred, hot solution in 0.5 g portions over a 2 hour period. Again $H_2$ gas was evolved. A total of 4 percent by weight of lactic acid was then added. The hot solution was filtered to remove insoluble residue and evaporated at 90°C until a scum or film formed on the surface. The resulting solution had an Al:Mg molar ratio equal to 2.00. This solution was cooled to 40°C and treated with 1 percent by weight of a high molecular weight polyethylene oxide to give a clear, viscous solution. The viscosified solution was extruded at a pressure of about 30 psig (0.2 MPa) through a 10 mil (0.25 mm) orifice into a high velocity stream of dry $N_2$ where the solution was blown into fibers having a diameter of 5 to 10 µm which were collected as a fibrous mat on a 10 mesh (2 mm) screen. The mat of fibers was dried for 1 hour at 180°C and then fired at 1,000°C for 1 hour. A sample of the fibers were ground to a powder. The X-ray diffraction pattern of the powdered sample of the resultant ceramic fibers matched the pattern of $MgAl_2O_4$.

Example 2

A chloride solution was prepared by dissolving a 48.28 g sample of $AlCl_3 \cdot 6H_2O$ in 150 milliliters (ml) of deionized water while stirring. A 4.86 g sample of magnesium metal was added to the chloride solution. Then the solution was heated to 100°C under reflux conditions. After the magnesium was completely dissolved, 5.39 g of aluminum metal was added to the solution to form a clear solution. The solution had an Al:Mg molar ratio of 2.00. Then sufficient $ZrCl_4$ was added to the clear solution to form 500 ppm $ZrO_2$ in the final fiber product. The solution temperature was lowered to 60-70°C and then 10 g of lactic acid was added to the solution to prevent gelling or crystallization of the solution. The solution was then concentrated by evaporation using a rotary evaporator until the viscosity of the solution was 100 to 200 poise (10 to 20 Pa.s). The viscous solution was used to form fibers using the following procedure:

The clear solution was fiberized by extruding the solution at 40 psig (0.27 MPa) through a 16 mil (0.4 mm) orifice into three high velocity jets of dry $N_2$ issuing from 3 holes situated concentrically, 120° from each other around an orifice. The jets of $N_2$ angled at 20° toward the center line of the orifice so that the solution coming from the orifice was picked up, elongated, and blown into precursor fibers having a diameter of 5 µm to 10 µm. The precursor fibers were collected on a screen mounted 6 feet (1.8 m) from the spray nozzle. Two heat guns were mounted near the spray nozzle to help dry the fibers as they were formed.

The mat of precursor fibers collected on the screen was dried at 25°C for 1 hour. The dried mat was removed from the screen and fired to 1,500°C for 1 hour using a rapid temperature furnace with an automatic controller. The firing was carried out to drive off the chloride and form oxide fibers. The precursor fiber firing schedule is shown in Table II below. The resultant product was found to be $MgAl_2O_4$ as determined by X-ray diffraction analysis.

## TABLE I

| Step | Temperature (°C) | Rate and Time of Soaking |
|------|------------------|--------------------------|
| 1 | From room temperature (~25) to 200 | at 300.°C/hr |
| 2 | From 200 to 450 | at 500°C/hr |
| 3 | At 450 | hold for 30 minutes |
| 4 | From 450 to 550 | at 200°C/hr |
| 5 | At 550 | hold for 30 minutes |
| 6 | From 550 to 1,500 | at 1,250°C/hr |
| 7 | At 1,500 | hold for 1 hour |

The $MgAl_2O_4$ fibers produced after firing was subjected to the general friability test procedure described above. The $MgAl_2O_4$ fibers had a friability index of 0.1.

Example 3

A magnesium aluminate fiber with an aluminum to magnesium ratio of about 2.00 having a diameter of from 1 to 10 $\mu$m and length up to about 5 inches (12.7 cm), was made by the following procedure: 241.43 g of aluminum chloride hexahydrate were dissolved in 500 ml of deionized water and heated to reflux, approximately 100°C. After complete solution had taken place 24.305 g of magnesium metal was slowly added to the chloride solution over a 2 hour period with the evolution of $H_2$ gas. After the reaction was complete and the solution clear, 26.98 g of aluminum metal was slowly added to the chloride solution over a 2 hour period with the evolution of $H_2$ gas. After the reaction was complete and a clear solution resulted, 0.535 g of $ZrCl_4$, zirconium chloride, sufficient to produce a 2,000 ppm $ZrO_2$ level in the final oxide fiber, was added to the chloride solution. This solution was then cooled to 40°C and 49.6 g of 88 percent lactic acid was added. The aluminum magnesium oxychloride solution was carefully filtered through a fine acid-resistant filter paper.

A 2.75 percent by weight solution of polyethylene oxide was made by stirring in distilled water overnight. Once the polymer was in solution, 0.1 percent $MnCl_2 \cdot 4H_2O$ was added as a stabilizer.

5.00 g of the polyethylene oxide solution was added to the above aluminum magnesium oxychloride solution. The resultant mixture was evaporated on a standard laboratory rotary evaporator at 60°C under reduced pressure. This was continued until a room temperature viscosity of 80 poise (8 Pa · s), as measured by a Brookfield viscometer with a number 5 RVT spindle at 10 rpm, was produced. The resulting oxychloride solution was transparent with a slight yellowish tint. The viscosified solution was then extruded at a pressure of about 30 psig (0.2 MPa) through a 10 ml (0.25 mm) orifice into a high velocity stream of dry $N_2$, where the solution was blown into fibers having diameters of 1 to 10 $\mu$m which were collected as a fibrous mat on a 10 mesh (2 mm) screen. The mat of fibers was dried overnight at 100°C and then heated to 1,400°C over a 4 hour cycle. The X-ray diffraction pattern of the resultant fiber indicated pure magnesium aluminate. The fiber was very fragile and could not be handled without crumbling. Fiber microstructure was very coarse having single grains the size of the diameter of the fiber. The friability index was 0.10.

Example 4

Fibers were made as described in Example 3 except that the following formulation was used:
241.43 g aluminum chloride hexahydrate
23.91 g magnesium metal
26.98 g aluminum metal

49.6 g lactic acid 88 percent
.535 g zirconium chloride
5.00 g 2.75 percent solution of polyethylene oxide
The resultant fiber had an aluminum to magnesium molar ratio of 2.03. The fiber microstructure consisted of small, about 02. μm diameter, grains with numerous slip planes visible. The fiber had a friability index of 0.30.

Example 5

Fibers were made as described in Example 3 except that the following formulation was used:
241.43 g aluminum chloride hexahydrate
23.71 g magnesium metal
26.98 g aluminum metal
49.6 g lactic acid 88 percent
.535 g zirconium chloride
5.00 g 2.75 percent solution of polyethylene oxide
The resultant fiber had an aluminum to magnesium molar ratio of 2.05. The resultant fiber microstructure was smooth with individual grains difficult to distinguish. The fiber had a friability index of 0.60.

Example 6

Fibers were made as described in Example 4 except that the following formulation was used:
241.43 g aluminum chloride hexahydrate
23.48 g magnesium metal
26.98 g aluminum metal
49.6 g lactic acid 88 percent
.535 g zirconium chloride
5.00 g 2.75 percent solution of polyethylene oxide
The resultant fiber had an aluminum to magnesium molar ratio of 2.07. The resultant fiber microstructure was smooth with individual grains difficult to distinguish. The fiber had a friability index of 0.50.

Example 7

Fibers were made as described in Example 3 except that the following formulation was used:
241.43 g aluminum chloride hexahydrate
23.14 g magnesium metal
26.98 g aluminum metal
49.6 g lactic acid 88 percent
.535 g zirconium chloride
5.00 g 2.75 percent solution of polyethylene oxide
The resultant fiber had an aluminum to magnesium molar ratio of 2.10. The resultant fiber microstructure was smooth with individual grains difficult to distinguish. The fiber had a friability index of 0.35.

Example 8

Fibers were made as described in Example 3 except that the following formulation was used:
241.43 g aluminum chloride hexahydrate
23.09 g magnesium metal
26.98 g aluminum metal
49.6 g lactic acid 88 percent
.535 g zirconium chloride
5.00 g 2.75 percent solution of polyethylene oxide
The resultant fiber had an aluminum to magnesium molar ratio of 2.20. The resultant fiber microstructure was smooth with individual grains difficult to distinguish. The fiber had a friability index of 0.40.

Example 9

Fibers were made as described in Example 3 except that no $ZrCl_4$ was added.
The resultant fiber had a microstructure exhibiting obvious grain boundaries and slip planes in grains. The fiber had a friability index of 0.05

Example A (Comparative Example)

An attempt was made to produce a solution suitable for spinning using the following procedure: 241.43 g of aluminum chloride hexahydrate were dissolved in 500 ml of deionized water and heated to reflux, approximately 100°C. After complete solution had taken place 26.98 g of aluminum metal was slowly added to the chloride solution over a 2 hour period with the evolution of $H_2$ gas. After the reaction was complete and the solution clear, 24.305 g of magnesium metal was slowly added to the solution over 2 hours.

The resultant solution consisted of a white gel precipitate with much unreacted magnesium metal. No fibers could be formed.

**Claims**

1. A process for preparing a fiberizable precursor solution suitable for producing magnesium aluminate fibers, which process comprises the sequential ordered steps of:
(a) preparing an aluminum salt solution;
(b) dissolving magnesium metal or compound in the solution prepared in step (a); and
(c) dissolving aluminum metal or compound in the solution prepared in step (b).

2. A process as claimed in Claim 1, including one or more of the following further steps
(i) an unordered step of adding to the solution of step (a), (b), or (c) a dopant to aid densification of the said fibers;
(ii) an ordered step of adding to the solution after step (c) or a subsequent step a stabilizing agent to prevent crystallization or gelling of the solution;
(iii) an ordered step of concentrating the solution prepared in step (c) or a subsequent step;
(iv) an ordered step of adding an organic polymeric spinning aid to the solution prepared in step (c) or a subsequent step.

3. A process as claimed in Claim 1 or Claim 2, wherein the temperature in steps (a), (b) and (c) is from 70° to 110°C.

4. A process as claimed in any one of the preceding claims, wherein the molar ratio of aluminum to magnesium in the solution prepared in step (c) is within the range of from 2.03 to 2.20.

5. A process as claimed in Claim 4, wherein said molar ratio is within the range from 2.03 to 2.10.

6. A process as claimed in Claim 4, wherein sufficient amounts of magnesium and aluminum metals are dissolved in steps (b) and (c) that the cation to anion molar ratio is in the range of 0.33:1 to 1:1.

7. A process as claimed in any one of the preceding claims including step (i) of Claim 2, wherein the said dopant comprises at least one compound that decomposes upon heating to form $ZrO_2$, $MnO_2$, $TiO_2$, $Cr_2O_3$, $Y_2O_3$ or mixtures thereof.

8. A process as claimed in Claim 7, wherein said dopant is zirconium chloride.

9. A process as claimed in any one of the preceding claims including step (ii) of Claim 2, wherein said stabilizing agent is lactic acid.

10. A process as claimed in any one of the preceding claims including step (iv) of Claim 2, wherein said spinning aid is polyethylene oxide.

11. A process as claimed in any one of the preceding claims, wherein the aluminum salt is aluminum chloride.

12. A process as claimed in any one of the preceding claims, wherein the solvent of the precursor solution is water.

13. A process as claimed in any one of the preceding claims, wherein magnesium metal is added in step (b) and aluminum metal is added in step (c).

14. The use in the preparation of magnesium aluminate fibers of a fiberizable precursor solution prepared by a process as claimed in any one of the preceding claims.

15. A process for preparing magnesium aluminate fibers which comprises concentrating to a viscous material of from 2.5 to 50 Pa.s (25 to 500 poise) a fiberizable solution prepared by a process as claimed in any one of Claims 1 to 13 including steps (i) and (ii) of Claim 2; fiberizing said viscous material to form fibers; and heating said fibers sufficiently to form crystalline magnesium aluminate fibers.

16. A process as claimed in Claim 15, wherein said heating is at a temperature within the range of 800°C to 1,600°C.

17. A composition which comprises a fiberizable precursor solution suitable for producing magnesium aluminate fibers having a fine-grained microstructure with a molar ratio of aluminum to magnesium within the range of from 2.03 to 2.20.

18. A composition as claimed in Claim 17, wherein a dopant is also present in said solution.

19. A composition as claimed in Claim 18, wherein said dopant comprises at least one compound that decomposes upon heating to form $ZrO_2$, $MnO_2$, $TiO_2$, $Cr_2O_3$, $Y_2O_3$ or mixtures thereof.

20. A composition as claimed in Claim 19, wherein said dopant is zirconium chloride.

21. A composition as claimed in any one of Claims 17 to 20, wherein a stabilizing agent is present in said solution.

22. A composition as claimed in Claim 21, wherein said stabilizing agent is lactic acid.

23. A composition as claimed in any one of Claims 17 to 22, wherein a spinning aid is present in said solution.

24. A composition as claimed in Claim 23, wherein said spinning aid is polyethylene oxide. ·

25. A composition as claimed in any one of Claims 17 to 24, wherein said molar ratio is within the range from 2.03 to 2.10.

26. A composition as claimed in any one of Claims 17 to 25, wherein magnesium and aluminum metals are dissolved in the solution such that the cation to anion molar ratio is in the range of 0.33:1 to 1:1.

## Patentansprüche

1. Verfahren zur Herstellung einer faserbildenden Vorläuferlösung, die zur Erzeugung von Magnesium-Aluminat-Fasern geeignet ist, wobei das Verfahren folgende der Reihe nach geordnete Schritte umfaßt:
(a) Herstellen einer Aluminiumsalzlösung,
(b) Auflösen von metallisohem Magnesium oder einer Magnesiumverbindung in der in Schritt (a) hergestellten Lösung und
(c) Auflösen von metallischem Aluminium oder einer Aluminiumverbindung in der in Schritt (b) hergestellten Lösung.

2. Verfahren nach Anspruch 1, worin einer oder mehrere der folgenden weiteren Schritte eingeschlossen sind:
(i) ein ungeordneter Schritt der Zugabe eines Dotiermittels zur Lösung von Schritt (a), (b) oder (c), um die Verdichtung der Fasern zu unterstützen,
(ii) ein geordneter Schritt der Zugabe eines Stabilisators zur Lösung nach Schritt (c) oder einem nachfolgenden Schritt, um Kristallisation oder Gelbildung der Lösung zu verhindern,
(iii) ein geordneter Schritt zur Konzentrierung der in Schritt (c) oder einem nachfolgenden Schritt hergestellten Lösung,
(iv) ein geordneter Schritt der Zugabe einer organischen polymeren Spinnhilfe zu der in Schritt (c) oder einem nachfolgenden Schritt hergestellten Lösung.

3. Verfahren nach Anspruch 1 oder 2, worin die Temperatur in den Schritten (a), (b) und (c) von 70° bis 110°C beträgt.

4. Verfahren nach einem der vorhergehenden Ansprüche, worin das Molverhältnis von Aluminium zu Magnesium in der in Schritt (c) hergestellten Lösung im Bereich von 2,03 bis 2,20 liegt.

5. Verfahren nach Anspruch 4, worin das Molverhältnis im Bereich von 2,03 bis 2,10 liegt.

6. Verfahren nach Anspruch 4, worin ausreichende Mengen von Magnesium und Aluminiummetall in den Schritten (b) und (c) gelöst werden, so daß das Molverhältnis von Kationen zu Anionen im Bereich von 0,33:1 bis 1:1 liegt.

7. Verfahren nach einem der vorhergehenden Ansprüche, einschließlich Schritt (i) nach Anspruch 2, worin das Dotierungsmittel mindestens eine Verbindung enthält, die sich während des Erhitzens zu $ZrO_2$, $MnO_2$, $TiO_2$, $Cr_2O_3$, $Y_2O_3$ oder einem Gemisch davon zersetzt.

8. Verfahren nach Anspruch 7, worin das Dotierungsmittel Zirkoniumchlorid ist.

9. Verfahren nach einem der vorhergehenden Ansprüche, einschließlich Schritt (ii) nach Anspruch 2, worin der Stabilisator Milchsäure ist.

10. Verfahren nach einem der vorhergehenden Ansprüche, einschließlich Schritt (iv) nach Anspruch 2, worin die Spinnhilfe Polyethylenoxid ist.

11. Verfahren nach einem der vorhergehenden Ansprüche, worin das Aluminiumsalz Aluminiumchlorid ist.

12. Verfahren nach einem der vorhergehenden Ansprüche, worin das Lösungsmittel der Vorläuferlösung Wasser ist.

13. Verfahren nach einem der vorhergehenden Ansprüche, worin in Schritt (b) Magnesiummetall und in Schritt (c) Aluminiummetall zugegeben wird.

14. Verwendung einer faserbildenden Vorläuferlösung zur Herstellung von Magnesiumaluminat-Fasern, die durch ein Verfahren nach einem der vorhergehenden Ansprüche hergestellt wird.

15. Verfahren zur Herstellung von Magnesiumaluminat-Fasern, umfassend das Konzentrieren einer faserbildenden Lösung, die durch ein Verfahren nach einem der Ansprüche 1 bis 13, einschließlich der Schritte (i) und (ii) nach Anspruch 2 hergestellt wurde, zu einem viskosen Material mit 2,5 bis 50 Pa • s (25 bis 500 Poise), das Zerfasern des viskosen Materials zur Erzeugung von Fasern und das ausreichende Erhitzen der Fasern, um kristalline Magnesium-Aluminat-Fasern zu erzeugen.

16. Verfahren nach Anspruch 15, worin das Erhitzen bei einer Temperatur im Bereich von 800°C bis 1600°C stattfindet.

17. Zusammensetzung, enthaltend eine faserbildende Vorläuferlösung, die zur Erzeugung von Magnesium-Aluminat-Fasern geeignet ist, die eine feinkörnige Mikrostruktur mit einem Molverhältnis von Aluminium zu Magnesium im Bereich von 2,03 bis 2,20 besitzen.

18. Zusammensetzung nach Anspruch 17, worin in der Lösung auch ein Dotierungsmittel anwesend ist.

19. Zusammensetzung nach Anspruch 18, worin das Dotierungsmittel mindestens eine Verbindung enthält, die beim Erhitzen unter Bildung von $ZrO_2$, $MnO_2$, $TiO_2$, $Cr_2O_3$, $Y_2O_3$ oder einem Gemisch davon zerfällt.

20. Zusammensetzung nach Anspruch 19, worin das Dotierungsmittel Zirkoniumchlorid ist.

21. Zusammensetzung nach einem der Ansprüche 17 bis 20, worin ein Stabilisator in der Lösung vorhanden ist.

22. Zusammensetzung nach Anspruch 21, worin der Stabilisator Milchsäure ist.

23. Zusammensetzung nach einem der Ansprüche 17 bis 22, worin eine Spinnhilfe in der Lösung vorhanden ist.

24. Zusammensetzung nach Anspruch 23, worin die Spinnhilfe Polyethylenoxid ist.

25. Zusammensetzung nach einem der Ansprüche 17 bis 24, worin das Molverhältnis im Bereich von 2,03 bis 2,10 ist.

26. Zusammensetzung nach einem der Ansprüche 17 bis 25, worin Magnesium- und Aluminiummetall in der Lösung gelöst werden, so daß das Molverhältnis von Kationen zu Anionen im Bereich von 0,33:1 bis 1:1 liegt.

## Revendications

1. Procédé de préparation d'une solution précurseur fibrogène apte à produire des fibres d'aluminate de magnésium, procédé qui comporte les étapes successives suivantes, dans l'ordre indiqué:
   (a) préparation d'une solution de sel d'aluminium,
   (b) dissolution de magnésium métallique ou d'un dérivé du magnésium dans la solution préparée à l'étape (a), et
   (c) dissolution d'aluminium métallique ou d'un dérivé de l'aluminium dans la solution préparée à l'étape (b).

2. Procédé selon la revendication 1, comportant une ou plusieurs des étapes supplémentaires ci-après:
   (i) une étape, placée de manière quelconque consistant à ajouter à la solution de l'étape (a), (b) ou (c) un agent de dopage pour faciliter la densification desdites fibres,
   (ii) une étape, placée dans l'ordre indiqué consistant à ajouter à la solution après l'étape (c) ou une étape ultérieure, un agent stabilisant pour empêcher la cristallisation ou la gélification de la solution,
   (iii) une étape, placée dans l'ordre indiqué consistant à concentrer la solution préparée à l'étape (c) ou dans une étape ultérieure,
   (iv) une étape, placée dans l'ordre indiqué consistant à ajouter un auxiliaire de filage polymère organique à la solution préparée à l'étape (c) ou une étape ultérieure.

3. Procédé selon la revendication 1 ou 2, dans lequel la température dans les étapes (a), (b) et (c) est de 70 à 110°C.

4. Procédé selon l'une quelconque des revendications précédentes, dans lequel le rapport molaire de l'aluminium au magnésium dans la solution préparée à l'étape (c) est situé dans l'intervalle allant de 2,03 à 2,20.

5. Procédé selon la revendication 4, dans lequel ledit rapport molaire est situé dans l'intervalle allant de 2,03 à 2,10.

6. Procédé selon la revendication 4, dans lequel on dissout le magnésium et l'aluminium métalliques en des quantités suffisantes dans les étapes (b) et (c) pour que le rapport molaire du cation à l'anion soit situé dans l'intervalle allant de 0,33:1 à 1:1.

7. Procédé selon l'une quelconque des revendications précédentes, comprenant l'étape (i) de la revendication 2, dans lequel ledit agent de dopage comprend au moins un composé qui se décompose au chauffage pour former $ZrO_2$, $MnO_2$, $TiO_2$, $Cr_2O_3$, $Y_2O_3$ ou leurs mélanges.

8. Procédé selon la revendication 7, dans lequel ledit agent de dopage est le chlorure de zirconium.

9. Procédé selon l'une quelconque des revendications précédentes, comprenant l'étape (ii) de la revendication 2, dans lequel ledit agent stabilisant est l'acide lactique.

10. Procédé selon l'une quelconque des revendications précédentes, comprenant l'étape (iv) de la revendication 2, dans lequel ledit auxiliaire de filage est l'oxyde de polyéthylène.

11. Procédé selon l'une quelconque des revendications précédentes, dans lequel le sel d'aluminium est le chlorure d'aluminium.

12. Procédé selon l'une quelconque des revendications précédentes, dans lequel le solvant de la solution précurseur est l'eau.

13. Procédé selon l'une quelconque des revendications précédentes, dans lequel on ajoute du magnésium métallique à l'étape (b) et on ajoute de l'aluminium métallique à l'étape (c).

14. Utilisation dans la préparation de fibres d'aluminium de magnésium d'une solution précurseur fibrogène préparée par un procédé selon l'une quelconque des revendications précédentes.

15. Procédé de préparation de fibres d'aluminate de magnésium, qui comprend la concentration en une matière visqueuse ayant une viscosité de 2,5 à 50 pa • s (25 à 500 poises) d'une solution fibrogène préparée par un procédé selon l'une quelconque des revendications 1 à 13 y compris les étapes (i) et (ii) de la revendication 2, la transformation de ladite matière visqueuse en fibres pour former des fibres, et le chauffage desdites fibres suffisamment pour former des fibres en aluminate de magnésium cristallin.

16. Procédé selon la revendication 15, dans lequel ledit chauffage a lieu à une température située dans l'intervalle allant de 800 à 1600°C.

17. Composition qui comprend une solution précurseur fibrogène convenant pour la production de fibres d'aluminate de magnésium ayant une microstructure à grains fins, avec un rapport molaire d'aluminium au magnésium situé dans l'intervalle allant de 2,03 à 2,20.

18. Composition selon la revendication 17, dans laquelle un agent de dopage est également présent dans ladite solution.

19. Composition selon la revendication 18, dans laquelle ledit agent de dopage comprend au moins un composé qui se décompose au chauffage pour former $ZrO_2$, $MnO_2$, $TiO_2$, $Cr_2O_3$, $Y_2O_3$ ou leurs mélanges.

20. Composition selon la revendication 19, dans laquelle ledit agent de dopage est le chlorure de zirconium.

21. Composition selon l'une quelconque des revendications 17 à 20, dans laquelle un agent stabilisant est présent dans ladite solution.

22. Composition selon la revendication 21, dans laquelle ledit agent stabilisant est l'acide lactique.

23. Composition selon l'une quelconque des revendications 17 à 22, dans laquelle un auxiliaire de filage est présent dans ladite solution.

24. Composition selon la revendication 23, dans laquelle ledit auxiliaire de filage est l'oxyde de polyéthylène.

25. Composition selon l'une quelconque des revendications 17 à 24, dans laquelle ledit rapport molaire est située dans l'intervalle allant de 2,03 à 2,10.

26. Composition selon l'une quelconque des revendications 17 à 25, dans laquelle du magnésium et de l'aluminium métalliques sont dissous dans la solution de façon que le rapport molaire du cation à l'anion soit situé dans l'intervalle allant de 0,33:1 à 1:1.